# EUROPEAN PATENT APPLICATION

(11) **EP 2 445 268 A1**
(43) Date of publication of application: **25.04.2012**
(21) Application number: 10306155.2
(22) Date of filing: 22.10.2010
(51) Int. Cl.: H04W 52/02

(54) **Method for managing an hybrid wired/wireless network**

(71) Applicant: Thomson Licensing, 92130 Issy-les-Moulineaux (FR)
(72) Inventor: Taibi, Charline, 92130, Issy les Moulineaux (FR); Fontaine, Patrick, 92130, Issy les Moulineaux (FR); Dore, Renaud, 92130, Issy les Moulineaux (FR)
(74) Representative: Ruellan-Lemonnier, Brigitte

(57) **Abstract**

A method for managing an hybrid network (HN) comprising a network controller (NC), a infrastructure, a first switched-on wireless access (AP1) and at least one second switched-on wireless access point (AP2,AP3). Said access points (AP1,AP2,AP3) is connected to said network controller (NC) via said infrastructure. A switched-on wireless access point (APj) detects a wireless link (<APj, Ni>) between a wireless node (Ni) and a switched-on wireless access point (APj) when said access point (APj) is currently receiving from said node (Ni) a signal having a strength greater than a first strength threshold (LS1T), The access point (APj) determines that a wireless association ([APj, Ni]) is set between said node (Ni) and said access point (APj) when said node (Ni) and said access point (APj) are both currently configured for exchanging data. Each of the access point (APj) is configured for sending a first report (REP1) on strength of any wireless link where said access point (APj) is involved. Each of the access point (APj) is further configured for sending a second report (REP2) on a status of any current wireless association where said access point (AP1,AP2,AP3) is involved.
Said first and second report (REP1,REP2) are sent to the network controller (NC) via said infrastructure, and said network controller performs the steps of:
- receiving said first and second report (REP1,REP2);
- synthesizing information comprised in said first and second report (REP1,REP2).

## Description

### Field Of The Invention

This invention relates to the field of hybrid wired/wireless networks comprising a backbone, at least partly in wired technology, set up in a surface-limited area and wireless access points connected on said backbone. Said access points form a wireless network covering partially or totally said area. The hybrid network further comprising a network controller for centralizing reports sent from the access points and for configuring and controlling these access points in view of optimizing the power consumption, the radio frequency exposure and/or the quality of data transmission and managing the bandwidth allocation of said hybrid networks with wireless nodes.

### Background Of The Invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In the State of the Art, there are hybrid wired/wireless home networks composed of a backbone in wired technology such as PowerLine Communication (also known as "PLC"), Multimedia over Coax Alliance (MoCA®) or Ethernet cabling, on which a number of wireless (e.g. compliant with WiFi - 802.11 std) access points are connected. The home is covered by an aggregation of small wireless clusters generated by said access points. Any wireless client device, mobile or stationary, hereinafter called "node" located inside said wireless cluster is then able to communicate with the access point. A node is adapted for sending wireless signals to access points and also to receive wireless signals from access points when an association is set with one of said access points. The wireless network is set-up with several access points geographically distributed in the house and coordinated in order to optimize the wireless coverage.

As the number of equipments (access points) composing the infrastructure will increase, the question of environmental consideration and especially the power consumption points out. An interesting challenge is to propose a method allowing to reduce the power consumption and also the radio emissions inside the whole network, guaranteeing the continuity and the quality of the services (video, audio and voice data exchange between access points and node) for the end users.

Today, a known solution for optimizing the power consumption on the wireless system, consist in entering nodes into power saving mode of the 802.11 standard (PS, PSMP). These mechanisms allows the nodes to periodically enter power saving mode (standby mode) and to wake-up. These mechanisms only plan power saving modes for the nodes and not for the access point. In a domestic hybrid network comprising numerous access points and a single node this is a drawback because the power saving would be not very consistent.

Nothing is described today in the standards such as IEEE 802.11-2007, IEEE 802.11 n-2009 and IEEE 802.11v-D7-0 neither planned in its future revisions to allow the access points to enter a power saving mode.

One of the goals of the present invention is to propose mechanisms for optimizing the power consumption of the hybrid network and/or the quality of service of said hybrid network based on the switch-off of an access point and correlatively by switching on of an access point. These switching-off/switching-on operations are commanded via the wired infrastructure and triggered on criteria elaborated in a central instance of the hybrid network (later called "network controller"). In a more summarized way the invention deals with a revolution of paradigm: the decision for associating an access point with a node is delegated to the central instance (latter named "network controller") connected over the wired infrastructure. In known wireless standard (e.g. IEEE 802.11), the lead for deciding with which access point is associated is given to the node.

### Summary Of The Invention

The technical problem that present invention intends to solve is to manage the hybrid network in a centralized manner such as the use of the access points of said network is optimized according a given constrain (e.g. reduction of global power consumption, by keeping a constant quality of data exchanges). This management is dedicated to a central instance of said hybrid network, connected via a wired infrastructure to all access points. The central instance receives via said wired infrastructure, from each of the access points, reports related to the wireless links and wireless associations in which said access point is involved. The central instance is configured for synthetizing these reports, detecting and/or prevent troubles at any level (wireless link, wireless association), and for sending adapted command to appropriate access point for solving said trouble still via said wired infrastructure.

Thus, the present invention concerns according to a first aspect, a method for managing an hybrid network HN comprising a network controller NC, a infrastructure, a first switched-on wireless access AP1 and at least one second switched-on wireless access point AP2, AP3, said access points AP1, AP2, AP3 being connected to said network controller NC via said infrastructure, a switched-on wireless access point APj detecting a wireless link <APj, Ni> between a wireless node Ni and one said access point APj when said access point APj is currently receiving from said node Ni a signal having a strength greater than a first strength threshold LS1T, wherein switched-on wireless access point APj determines a wireless association [APj, Ni] is set between said node Ni and said access point APj when said node Ni and said access point APj are both currently configured for exchanging data, each of the switched-on wireless access point APj being configured for sending a first report REP1 on strength of any wireless link where said access point APj is involved, each of the switched-on wireless access point APj being further configured for sending a second report REP2 on a status of any current wireless association where said access point AP1, AP2, AP3 is involved, characterized in that said first and second report REP1, REP2 are sent to the network controller NC via said infrastructure, and in that it involves, at said network controller NC, steps of:
- receiving said first and second report REP1, REP2;
- synthesizing information comprised in said first and second report REP1, REP2.

A first advantage of the invention is it allows an optimisation which is performed at a system level and not at the access point level or at the node level. For example, a decision for setting a wireless association between a node and an access point is taken by the network controller and not by the node and the access point such that in IEEE 802.11 standard. The central controller takes into account the information synthetized from reports sent by all the access points. Then, bad side effects can be avoided.

As a second advantage the method according to the invention allows to cure trouble that could happen at the node level or at the access point level and also to prevent the appearance of said troubles.

According to a second aspect embodiment, the present invention concerns also a system for managing an hybrid network HN comprising a network controller NC, a infrastructure, a first switched-on wireless access AP1 and at least one second switched-on wireless access point AP2, AP3, said access points AP1, AP2, AP3 being connected to said network controller NC via said infrastructure. A switched-on wireless access point APj detects a wireless link <APj, Ni> between a wireless node Ni and one said access point APj when said access point APj is currently receiving from said node Ni a signal having a strength greater than a first strength threshold LS1T. The switched-on wireless access point APj determines a wireless association [APj, Ni] is set between said node Ni and the access point APj when said node Ni and said access point APj are both currently configured for exchanging data, each of the switched-on wireless access point APj being configured for sending a first report REP1 on strength of any wireless link where said access point APj is involved, each of the switched-on wireless access point APj being further configured for sending a second report REP2 on a status of any current wireless association where said access point AP1, AP2, AP3 is involved characterized in that said network controller NC comprises :
Means for receiving said first and second report REP1, REP2 form said switched-on wireless access point AP1, AP2, AP3;
Means for synthesizing information comprised in said first and second report REP1, REP2;
Means for sending a command via said infrastructure to any switched-on wireless access point AP1, AP2, AP3 connected over said infrastructure.
As a third advantage of the invention, one also can cite an easy deployment because the invention does not require any modification form existing wireless nodes.

### Brief Description Of The Drawings

The invention will be better understood and illustrated by means of the following embodiments and execution examples, in no way limitative, with reference to the appended figures on which:
Figure 1, represents an exemplary topology of a hybrid wired/wireless network;
Figure 2, represents a first evolution of said networks topology according to a second embodiment;
Figure 3, represents a second evolution of said networks topology according to a third embodiment;
Figure 4, represents a second evolution of said networks topology according to a fourth embodiment;
Figure 5, represents a third evolution of said networks topology according to a fifth embodiment;

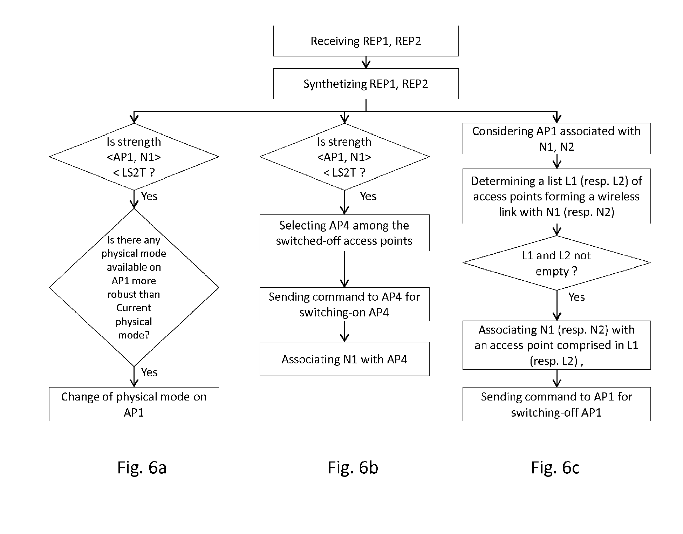

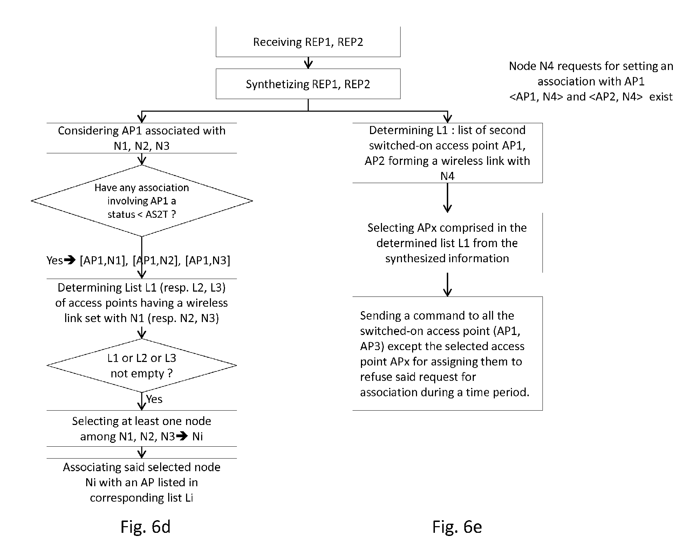

Figure 6a to 6e, represent flow charts of five embodiments.

### Detailed Description Of Preferred Embodiments

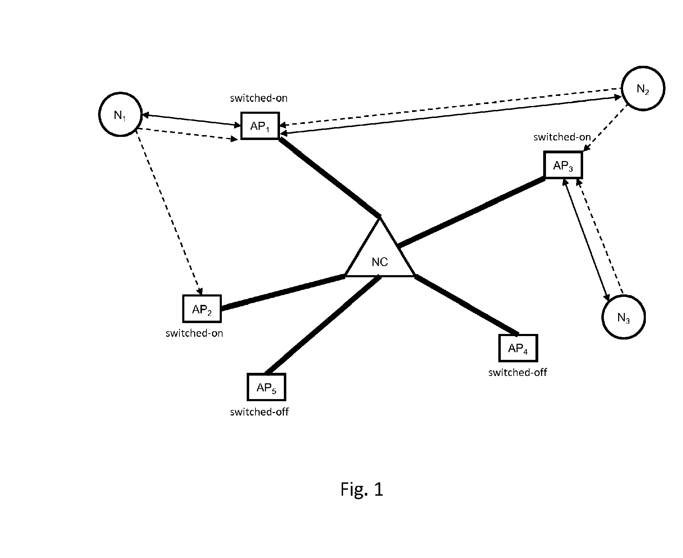

Figure 1 represents represents a hybrid network set up in a surface-limited area e.g. an apartment. The hybrid network comprises a backbone, five access points AP₁, AP₂, AP₃, AP₄, AP₅ and a network controller NC.

The backbone, also named "infrastructure" can be in "only wire technology", or composed of a mix of wire and wireless technologies. In the following one will describe an hybrid network comprising a "only wired" technology but the invention is not limited to this type of infrastructure.

The architecture of the hybrid network shown on figure 1 is of "star" type: that means that every access point (represented by a rectangular box) is connected to the network controller NC (triangular shape box) by a unique wired link (depicted by a large line). The invention is not limited to this architecture of network which can be of any type.

Each of said access point AP₁, AP₂, AP₃, AP₄, AP₅ comprises a wired interface adapted for exchanging data with any endpoint of the infrastructure via the wired infrastructure and a wireless interface for exchanging data with wireless nodes via wireless medium. The wireless interface is significantly more power consuming than the wired interface. Neither the wired interface nor the wireless interface is shown on figure 1.

In a preferred embodiment, all the wireless signals sent (and received) by the wireless access point of the network have the same frequency. Saying it in different way : the access point of the network are adapted for communicating with wireless nodes over a single canal. The advantage is to reduce the spectral occupation especially when the hybrid network is deployed in a domestic environment.

Each of said access point can operate either in a first mode of operation called latter "switched-off" mode or in a second mode of operation called latter "switched-on" mode.

In the "switched-off" mode, the wireless interface of the access point is disabled: the access point is then only configured for receiving data via the wired infrastructure, for example a command sent by the network controller for changing its mode of operation to the "switched-on" mode. Setting an access point in said "switched-off" mode reduces the power consumption of the network but also limit the wireless coverage and the available bandwidth of the hybrid network.

In an access point AP₁ operating in the "switched-on" mode, both the wireless and the wired interface are enabled: the access point AP₁ is then configured for:
- receiving a wireless signal from a wireless node N₁ via its wireless interface, in this case the access point AP1 detects that a wireless link is if formed between the wireless node N1 and the access point AP1; a wireless link will be detailed further below;
- exchanging data via its wireless interface with a wireless node N2; in this case a wireless association is set between the wireless node N2 and the access point AP1; a wireless association will be detailed further below;
- exchanging data via the infrastructure:
   for example receiving data via the infrastructure, as a command sent by the network controller NC e.g. for changing its mode of operation to the "switched-off" mode, for setting a wireless association or even for de-setting a first association [AP1, N2] in view of migrating said first association [AP1, N2] into a second association [AP2, N2];

This can also be sending data via the infrastructure to the network controller NC as different reports.

In the figure 1, the wireless access point AP₁, AP₂, AP₃ are in "switched-on" mode: they are also called latter "switched-on access point"; the wireless access points AP4, AP5 are in "switched-off" mode: the latter are also called "switched-off access point".

As a first definition, a switched-on wireless access point APj detects a wireless link between a wireless node Ni and said access point APj when said access point APj determines it is currently receiving from said wireless node Ni a signal having a strength greater than a first strength threshold LS1T. By "strength", it is meant a value representative of the quality of said wireless link such that : the power of the RF signal (RSS) received by the access point or the number of erroneous received bits corrected by the PHY layer, or the number of erroneous packets by MAC layer or more generally any MAC or PHY layer parameters or even any combination of said previous parameters. By extension, one speaks of the strength of the wireless link.

In this document a wireless link between the wireless access point APj and the wireless node Ni will be noted <APj, Ni>. The strength of the wireless link <APj, Ni>is evaluated by the access point APj, notably with the power of the received signal.

For example, the first strength threshold LS1T is a value stored in a memory means of the network controller NC and transmitted to all the access point via said wired infrastructure each time the controller detects a new access point connected over the wired infrastructure.

A switched-on access point detects that it forms a wireless link with an access node when the access point receives a signal from a node and identifies said node. Detecting a wireless link does not mean there is currently data exchange between said node and said access point.

Advantageously, the first strength threshold LS1T is identical for all the access points.

Advantageously, each access point gets a proper value of the first strength threshold LS1T. The first strength threshold is for example the minimum decoding threshold of the most robust physical mode of the access point.

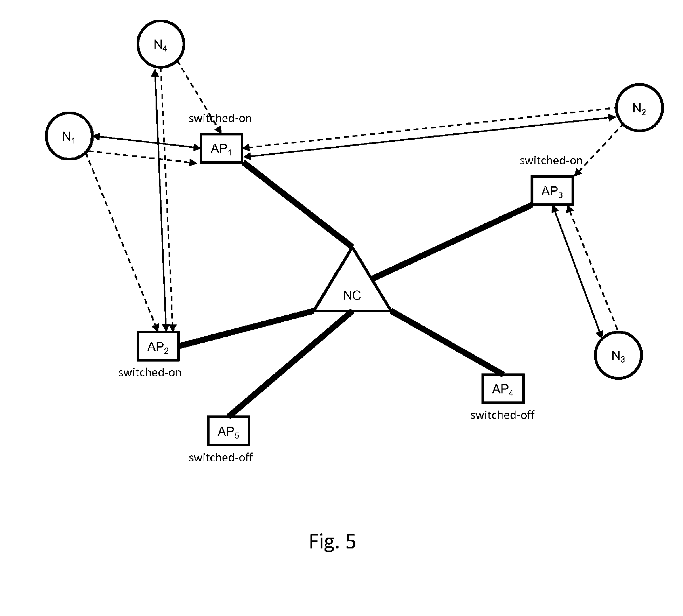

In this document a wireless link between the wireless access point APj and the wireless node Ni will be noted <APj, Ni>. In figures 1 to 5, one depicts a wireless link by a dotted line linking a node and an access point. Said dotted line has an arrow directed from the node to the access point for illustrating that the signal is detected by the wireless access point.

As a second definition, an access point APj detects a wireless association is set between a wireless node Nᵢ and a switched-on wireless access point APj if said wireless node Nᵢ and said access point APj are both currently configured for exchanging data.

In this document a wireless association between a wireless access point APj and the wireless node Ni will be noted [APj, Ni]. In figures 1 to 5, one depicts wireless association [APj, Ni] by a segment of plain line with an arrow at each extremity of the segment binding a node Ni and an access point APj. The arrows at both extremities illustrate that a signal is exchanged between the node Ni and the access point APj.

In 802.11 standard, a wireless association [APj, Ni] between the wireless access point APj and the wireless node Ni is set as a result of a multi-messages exchange between the access point APj and the wireless node Ni. The first message is for example a request for association sent by the node Ni to the access point APj. The second message is an acceptance for association sent in response by said access point APj to said node Ni. Among the multi-messages some may include authenticating information. The mechanism of setting an association will not be described later in this document as being non essential for describing the embodiment.

By "status" of wireless association, it is meant one or several values representative of the quality of said wireless association such that : throughput, latency, etc. of data traffic between APj and Ni .

Figure 1 shows a wireless association [AP1, N1] associating the wireless node N1 with the wireless access point AP1. The status of said association is not represented. Then, mandatorily a wireless link <AP1, N1> also exists which has a strength neither represented. A wireless link <AP2, N1> links the wireless node N1 with the wireless access point AP2. No wireless link exists between the node N1 and the access point AP₃, for example because due to the signal received by AP3 from the node N1 is weak, the strength of the wireless link is smaller than the first strength threshold LS1T. Naturally, there is no wireless link between node N1 and any switched-off access point AP4, AP5.

For completing the detailed description of the figure 1, a wireless association [AP1, N2] associates the wireless node N2 with the wireless access point AP1, a wireless association [AP3, N3] associates the wireless node N3 with the wireless access point AP3, wireless links <AP1, N2>, <AP3, N2> bind the node N2 with respectively the access point AP₁ and the access point AP₃. A node can not be associated simultaneously with two different access points, except temporary, for roaming purpose (migration of wireless association to a new wireless association).

According to a first embodiment, each switched-on wireless access point is adapted for sending a first report REP1 on strength of any (current wireless link where it is involved. In other words, for the situation of fig. 1, the report REP1 sent by an access point AP1 is related to the strength of any of the wireless link : <AP1, N1>, <AP1, N2>.

For describing further the situation depicted in figure 1, the access point AP1 sends to the network controller NC a report REP1 related to the wireless links <AP1, N1>, <AP1, N2>. The access point AP2 sends a report REP1 related to the wireless link <AP2, N1>. The access point AP3 sends a report REP1 related to the wireless link <AP3, N2> and <AP3, N3>.

The access points AP4 and AP5 do not send any first report REP1 because they both are switched-off.

According to said first embodiment, each of the switched-on wireless access point AP1, AP2, AP3 is further adapted for sending a second report REP2 on a status of any current wireless association where it is involved.

As an illustration, in the situation of figure 1, the access point AP1 sends to the network controller NC a second report REP2 related to the status of wireless associations [AP1, N1] and [AP1, N2]. The access point AP3 sends a report REP2 related to the status of wireless association [AP3, N3]. As it is not currently involved in any wireless association AP2 sends no second report REP2.

Advantageously said first and second report REP1, REP2 are sent to the network controller NC via said wired infrastructure.

The network controller NC receives said first and second report REP1, REP2 from the switched-on wireless access points and synthesizes information comprised in said first and second report REP1, REP2. This synthesis allows a central supervision of wireless links and wireless association and enables to arbitrate the mode of operation of access point and the association for optimizing the power consumption and the RF exposure in one hand and/or the quality of data exchanges in said hybrid network HN in the other hand.

Advantageously, the network controller NC requesting said reports REP1, REP2 to said switched-on wireless access point AP1, AP2, AP3.

Advantageously, every switched-on wireless access point AP1, AP2, AP3 sends periodically said first and second reports REP1, REP2 at a its own rhythm.

As discussed above, two types of optimisation are allowable through this embodiment. A first type concerns the quality of service of the hybrid network; a second type concerns the reduction of the power consumption of the hybrid network.

The first type of optimization can be illustrated in various situation presented in fig.1. Five embodiments of method for managing the hybrid network can be used:
Let's consider first the access point AP3 which is associated with the wireless nodes N3. From the report REP1 sent by AP3, the network controller NC detects that the wireless link <AP3, N3> has a strength smaller than a second strength threshold LS2T. This happened for example when the signal propagation between AP3 and N3 is degraded. This detection announces a degradation of the wireless association [AP3, N3] in a near future and further a potential degradation of any association where AP3 is involved.

Two solutions for handling the situation represent two embodiments:
A first solution consists in changing the physical mode of the access point AP3 for using, when available a more robust physical mode.

This embodiment is summarized as follows : A wireless association [AP3, N3] is set between a first node N3 and said first switched-on wireless access point AP3 and the first access point AP3 is currently configured for exchanging data in a first physical mode.

When said network controller NC determines that the wireless link <AP3, N3> between the first node N3 and the first access point AP3 has a strength smaller than a second strength threshold LS2T, the method according to the embodiment further involves, at said the network controller NC, a steps of:
analysing from said report REP1, REP2 potential effects of a change from said first physical mode to a second physical mode which is more robust than said first physical mode by said access point AP1;
sending a first command CPM, via said infrastructure, to said access point AP1 for using a second physical mode instead of said first physical mode.

After implementation of this first embodiment the topology of the hybrid network shown on fig. 1 is apparently unchanged. Only the physical mode of AP3 was modified.

A second solution consists in "waking-up" one switched-off wireless access point which could be substituted to the access point AP3. This solution is implemented, for example when it is not possible to find any second physical mode for the access point AP3 that matches the requirement of the wireless associations. This happen for example when the second strength threshold LS2T is smaller than the limit value of the strength below which the wireless association [AP3, N3] is not set any more. This happens even when AP3 operates with its most robust physical mode.

This embodiment is summarized as follows: A wireless association [AP3, N3] is set between a first node N3 and said first switched-on wireless access point AP3. Said hybrid network HN further comprising at least one switched-off access point AP4, AP5 connected to said network controller NC via said wired infrastructure.

When said network controller NC determines that a wireless link <AP3, N3> between the first node N3 and the first access point AP3 has a strength smaller than said second strength threshold LS2T, the method according to the embodiment further involves, at said the network controller (NC), steps of:
- selecting an access point AP4 among the at least one switched-off access point AP4, AP5;
- sending a second command PNC via said wired infrastructure to said access point AP4 for switching-on said access point AP4;
- migrating the wireless association [AP3, N3] between said first node N3 and said first access point AP3 to a new wireless association [AP4, N3] between said first node N3 and said first access point AP4.

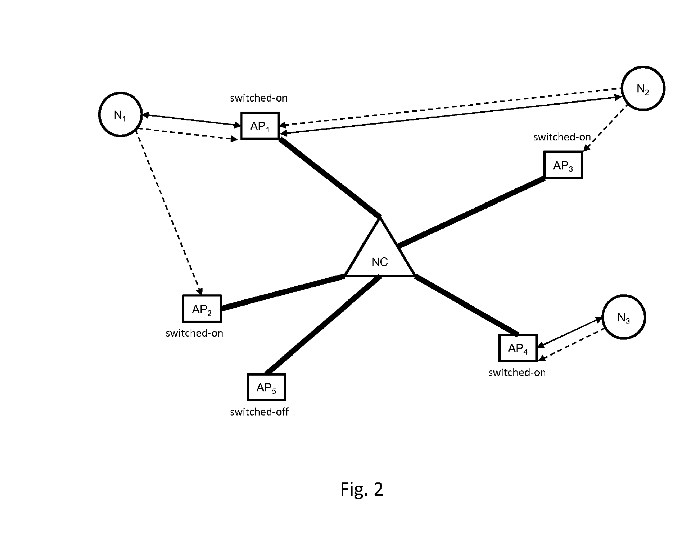

Following these steps, the topology of the hybrid network presented in fig.1 is changed as shown on figure 2.

Advantageously, said selection step of selection of access point AP4 among the at least one switched-off access point AP4, AP5 by said network controller NC is based on information related to localisation of said selected access point AP4 obtained from information previously synthesized by said network controller NC.

Advantageously, said selection step of selection of access point AP4 among the at least one switched-off access point AP4, AP5 involves, at said network controller NC, further steps of :
Defining a time slot during which each of the switched-off access points AP3, AP4 is temporary switched-on ;
Sending via said wired infrastructure a third command WUC to each switched-off access points AP4, AP5, wherein said second command WUC enables said switched-off access points AP4, AP5 to receive any wireless signal sent by any wireless node N1, N2, N3 during said assigned time slot and to send said first report REP1 to the network controller NC, via said wired infrastructure;
Receiving the first report REP1 from each of said access point AP4, AP5.

Let's consider the situation of the wireless access point AP1 in figure 1: A wireless association [AP1, N1] is set between a first node N1 and said first switched-on wireless access point AP1.

When said network controller NC determines that the wireless link < AP1, N1> between the first node N1 and the first access point AP1 has a strength smaller than the second strength threshold LS2T it means that trouble will probably occur concerning the operation of the first access point AP1 with said node N1. An advantage of said embodiment is that it allows to change the configuration before a trouble occurs.

A solution consists in identifying one switched-on wireless access point which could be substituted to the access point if available.

In this situation, the method according to the embodiment further involves, at said the network controller NC, further steps of:
determining, for each wireless node of said plurality of wireless nodes N1, N2, a list L1, L2 of second switched-on access point forming a wireless link with said wireless node; here L1 = {AP2} and L2 = {AP3}.
when there is at least one second switched-on access point in each determined list L1, L2;
   - in each of said determined list L1, L2, selecting a single access point APx;

Here, one selects APx = {AP3, AP2} where AP3 comes from the list L1 and AP3 comes from the list L2.
- for each of said wireless nodes N1, N2, migrating the wireless associations [AP1,N1], [AP1,N2] between said wireless nodes N1, N2 and said first access point AP1 to new wireless associations [AP3, N1], [AP2, N2] between said wireless nodes N1, N2 and said selected access points APx;
- sending a fourth command PFC via said wired infrastructure to said first switched-on access point AP1 for switching-off said first switched-on access point AP1.

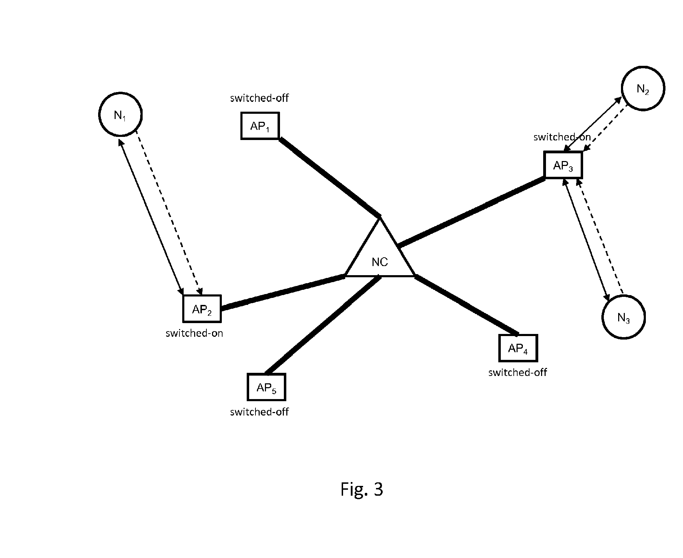

As a result of said embodiment, all the wireless associations where the first access point AP1 was involved are migrated into new associations and the first access point AP1 is switched off. Following these steps, the topology of the hybrid network presented in fig.1 is changed as shown on figure 3.

On one node Ni various applications, also called services, can run simultaneously. When said node Ni is associated with an access point APj in a wireless association [APj, Ni] applications exchange various data simultaneously with the access point APj. An important feature of the wireless communication standard is that during a migration from a wireless association [APj, Ni] to wireless association [APk, Ni] where j and k are different, loss of data can be avoided. The migration of wireless association is seamless. The migration of wireless association is quite similar to the (seamless) roaming operations of a GSM phone device changing its base station. As an illustration if the application is a video client, the migration of application has no effect on the video signal received by the node, if the application is a "voice" function, both the signal received and the signal sent by the node are not affected by the migration.

This feature is realized and guaranteed in the various embodiment described hereinafter.

Advantageously, said step of migrating the wireless association [APj, Ni] between a node Ni and an access point APj to a new wireless association [APk, Ni] between said node Ni and an access point APk consists in steps of:
Setting an association [APk, Ni] between said node Ni and an access point APk;
Cancelling the association [APj, Ni] between said node Ni and an access point APj.

Advantageously, said step of migrating the wireless association [APj, Ni] between a node Ni and an access point APj to a new wireless association [APk,Ni] between said node Ni and an access point APk is seamless for data sent and received by said node Ni.

When a wireless association [APj, Ni] is set, a modulated signal is exchanged between the node Ni and the access point APj : the modulation is, also named "physical mode". An access point can use various physical modes depending on the propagation conditions. Said physical modes are more or less robust depending on the redundancy mechanisms they comprise. The more robust the physical mode is, the less efficient in terms of throughput it is.

Let's consider again the situation of AP1 in figure 1: A wireless association [AP1, N1] is set between a first node N1 and said first switched-on wireless access point AP1.

When the network controller NC determines that at least one wireless association where said first switched-on access AP1 is involved has a status smaller than a second status threshold AS2F. Such a situation means that an access point is at least temporary overloaded and that its load has to be lightened.

A solution consists in identifying one switched-on wireless access point which could be substituted to the access point in case

When said network controller NC determines from the report REP2 that the wireless association [AP1, N2] has a status smaller than a second status threshold AS2F, the method according to the embodiment further involves, at said the network controller NC, further steps of:
determining, for each wireless node of said plurality of wireless nodes N1, N2 a list L1, L2 of second switched-on access point AP2, AP3 forming a wireless link with said wireless node;
when there is at least one second switched-on access point AP2, AP3 in at least one of said determined list L1, L2, L3,
   - selecting a single access point APy in one of said determined list L1, L2, L3;
   - migrating the wireless association [AP1,N1] between said first node N1 and said first access point AP1 to a new wireless association [APy,N1] between said first node N1 and said selected access point APy.

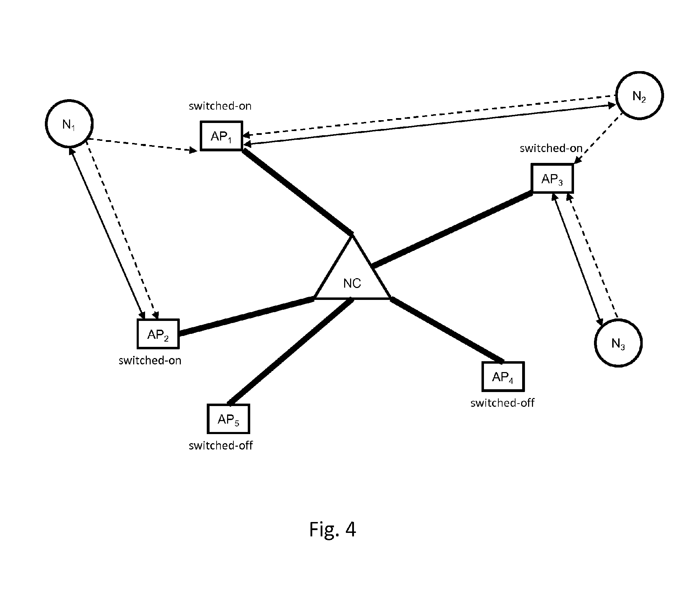

As a result, the load of the first access point AP1 will decrease but the first access point AP1 is still in use. Depending on the selecting step the wireless association which is cancelled is or is not the wireless association which was determined as having a status with a low value. After implementing said steps, the topology of the hybrid network presented in fig.1 is changed as shown on figure 4.

In the third and fourth embodiment, said steps of selection of a single access point AP2 involves a step of checking whether each new wireless association [APx, N1], [APx, N2] has a status greater than a first status threshold AS1T. One has to guarantee that one migrates from one wireless association into a new association only if the the potential new wireless association has a sufficient status.

As examples of said step of selection, one can consider a selection based on the starting date of the wireless association, or a selection based on the value of the status of said wireless associations.

A fifth embodiment applies when a new node tries to be associated with an access point. Again, let's consider the network of fig. 1 as a starting point. Then a wireless node N4 appears: the access point AP1 and AP2 form a wireless links respectively with said new node N4.

In IEEE802.11, the new node N4 would decide autonomously with which access point it will set a wireless association.

The following steps describe how the wireless association is set when a wireless node N4 requests to set an association with said first wireless switched-on access point AP1:
According to a fifth embodiment it involves, at the network controller NC, further steps of:
   receiving by said access point (AP1 said request for association;
   determining a list L1 of second switched-on access point AP1, AP2 forming a wireless link with said wireless node N4;
   selecting one access point APx comprised in the determined list L1 from the synthesized information;
   sending a fifth command ARC via said wired infrastructure to all the switched-on access point AP1, AP3 except the selected access point APx for assigning them to refuse said request for association during a time period;

Then, at the access point AP1 : it involves steps of:
accepting said request for association by the access point AP1, when the access point AP1 is the selected access point APx;
refusing said request for association by the access point AP1 when the access point AP1 is not the selected access point APx;

This time period has duration adapted for allowing node N4 to send several further requests for association to other switched-on access points.

The second type of optimization (reducing power consumption) can be illustrated by the third embodiment described above. An access point switch-off contributes to reduce the overall power consumption of the hybrid network. Caution has to be taken before switching-off access point AP1 when there is a wireless association involving AP1 : for example [AP1, N1] and [AP1, N2] as shown on figure 1. Then before switching-off AP1 one has to check first that there exists at least one switched-on access point which could be substituted to AP1 for setting the wireless associations[AP1, N1] and [AP1, N2].

Following these steps, the topology of the hybrid network presented in fig.1 is changed as shown on figure 3.

Advantageously, the system for managing the hybrid network according to the embodiment comprises :
means for determining for each wireless node involved in a wireless association with one of the switched-on wireless access point a list of switched-on access point (AP2, AP3) involved in a wireless link with said wireless node;
means for determining a list (LSOAP) of switched-off access point (AP3, AP4) connected over said infrastructure.

## Claims

1. Method for managing an hybrid network (HN) comprising a network controller (NC), a infrastructure, a first switched-on wireless access (AP1) and at least one second switched-on wireless access point (AP2, AP3), said access points (AP1, AP2, AP3) being connected to said network controller (NC) via said infrastructure, a switched-on wireless access point (APj) detecting a wireless link (<APj, Ni>) between a wireless node (Ni) and one said access point (APj) when said access point (APj) is currently receiving from said node (Ni) a signal having a strength greater than a first strength threshold (LS1T), wherein the access point (APj) determining a wireless association ([APj, Ni]) is set between said node (Nᵢ) and the access point (APj) when said node (Ni) and said access point (APj) are both currently configured for exchanging data, each of the access point (APj) being configured for sending a first report (REP1) on strength of any wireless link where said access point (APj) is involved, each of the access point (APj) being further configured for sending a second report (REP2) on a status of any current wireless association where said access point (AP1, AP2, AP3) is involved, **characterized in that** said first and second report (REP1, REP2) are sent to the network controller (NC) via said infrastructure, and **in that** it involves, at said network controller (NC), steps of:
- receiving said first and second report (REP1, REP2);
- synthesizing information comprised in said first and second report (REP1, REP2).

2. Method according to claim 1, **wherein** it further involves, at said network controller (NC), prior to said reception step, a steps of requesting said reports (REP1, REP2) to said switched-on wireless access point (AP1, AP2, AP3).

3. Method according to any one of claims 1 to 2, **wherein** the status of the wireless association (<APj, Ni>) between said switched-on wireless access point (APj) and said wireless node (Ni) comprises features of data traffic exchanged between said switched-on wireless access point (APj) and said wireless node (Ni).

4. Method according to any one of claim 1 to 3, a wireless association ([AP1, N1]) being set between a first node (N1) and said first switched-on wireless access point (AP1), said first access point (AP1) being currently configured for exchanging data in a first physical mode, **wherein** when said network controller (NC) determines that a wireless link (<AP1, N1>) between the first node (N1) and the first access point (AP1) has a strength smaller than a second strength threshold (LS2T), it further involves, at said the network controller (NC), a step of:
- analysing from said report (REP1, REP2) potential effects of a change from said first physical mode to a second physical mode which is more robust than said first physical mode by said access point (AP1);
- sending a first command (CPM), via said infrastructure, to said access point (AP1) for using a second physical mode instead of said first physical mode.

5. Method according to any one of claim 1 to 3, a wireless association ([AP1, N1]) being set between a first node (N1) and said first switched-on wireless access point (AP1), said hybrid network (HN) further comprising at least one switched-off access point (AP4, AP5) connected to said network controller (NC) via said infrastructure, **wherein** when said network controller (NC) determines that a wireless link (<AP1, N1>) between the first node (N1) and the first access point (AP1) has a strength smaller than a second strength threshold (LS2T), it further involves, at said the network controller (NC), steps of:
- selecting an access point (AP4) among the at least one switched-off access point (AP4, AP5);
- sending a second command (PNC) via said infrastructure to said access point (AP4) for switching-on said access point (AP4);
- migrating the wireless association ([AP1,N1]) between said first node (N1) and said first access point (AP1) to a new wireless association ([AP4,N1]) between said first node (N1) and said first access point (AP4).

6. Method according to claim 5, **wherein** said selection step of selection of access point (AP4) among the at least one switched-off access point (AP4, AP5) by said network controller (NC) is based on information related to localisation of said selected access point (AP4) obtained from information previously synthesized by said network controller (NC).

7. Method according to claim 5, **wherein** said selection step of selection of access point (AP4) among the at least one switched-off access point (AP4, AP5) involves, at said network controller (NC), further steps of :
- Defining a time slot during which each of the switched-off access points (AP3, AP4) is temporary switched-on ;
- Sending via said infrastructure a third command (WUC) to each switched-off access points (AP4, AP5), wherein said second command (WUC) enables said switched-off access points (AP4, AP5) to receive any wireless signal sent by any wireless node (N1, N2, N3, N4, N5) during said assigned time slot and to send said first report (REP1) to the network controller (NC), via said infrastructure;
- Receiving the first report (REP1) from each of said access point (AP4, AP5).

8. Method according to any one of claims 1 to 7, said first access point (AP1) being currently associated to a plurality of wireless nodes (N1, N2), **wherein** it involves, at the network controller (NC), further steps of:
- determining, for each wireless node of said plurality of wireless nodes (N1, N2), a list (L1, L2) of second switched-on access point (AP2, AP3) forming a wireless link with said wireless node;
- when there is at least one second switched-on access point (AP2, AP3) in each determined list (L1, L2),
- in each of said determined list (L1, L2), selecting a single access point (APx) from the synthesized information;
- for each of said wireless nodes (N1, N2), migrating the wireless association ([AP1,N1], [AP1,N2]) between said wireless nodes (N1, N2) and said first access point (AP1) to a new wireless association ([APx,N1], [APx,N2]) between said wireless nodes (N1, N2) and said selected access point (APx);
- sending a fourth command (PFC) via said infrastructure to said first switched-on access point (AP1) for switching-off said first switched-on access point (AP1).

9. Method according to an any one of claims 1 to 8, said first access point (AP1) being currently associated to a plurality of wireless nodes (N1, N2, N3), **wherein** when said network controller (NC) determines that at least one wireless association where said first switched-on access (AP1) is involved has a status smaller than a first status threshold (AS1F), it involves, at the network controller (NC), further steps of:
- determining, for each wireless node of said plurality of wireless nodes (N1, N2, N3) a list (L1, L2, L3) of second switched-on access point (AP2, AP3) forming a wireless link with said wireless node;
- when there is at least one second switched-on access point (AP2, AP3) in at least one of said determined list (L1, L2, L3),
- - selecting from the synthesized information a single access point (APy) in one of said determined list (L1, L2, L3);
- - migrating the wireless association ([AP1,N1]) between said first node (N1) and said first access point (AP1) to a new wireless association ([APy,N1]) between said first node (N1) and said selected access point (APy).

10. Method according to any one of claims 8 to 9, non-empty lists (L1, L2, L3) of access points being built from a corresponding node (N1, N2, N3), **wherein** said step of selection of a single access point (APx) in said at least one lists (L1, L2, L3) or in said list (L1, L2, L3) involves a step of checking whether each new wireless association ([APx, N1], [APx, N2]) has a status greater than a second status threshold (AS2T).

11. Method according to any one of claims 5 to 10, wherein said step of migrating the wireless association ([APj, Ni]) between a node (Ni) and an access point (APj) to a new wireless association ([APk, Ni]) between said node (Ni) and an access point (APk) is seamless for data sent and received by said node (Ni).

12. Method according to any one of claims 5 to 10, wherein said step of migrating the wireless association ([APj, Ni]) between a node (Ni) and an access point (APj) to a new wireless association ([APk,Ni]) between said node (Ni) and an access point (APk) consists in steps of:
- Setting the association ([APk, Ni]) between said node (Ni) and an access point (APk);
- Cancelling the association ([APj, Ni]) between said node (Ni) and an access point (APj).

13. Method according to an any one of claims 1 to 12, a wireless node (N4) requesting to set an association with said first wireless switched-on access point (AP1), **wherein** it involves, at the network controller (NC), further steps of :
- determining a list (L1) of second switched-on access point (AP1, AP2) forming a wireless link with said wireless node (N4);
- selecting one access point (APx) comprised in the determined list (L1) from the synthesized information;
- sending a fifth command (ARC) via said infrastructure to all the switched-on access point (AP1, AP3) except the selected access point (APx) for assigning them to refuse said request for association during a time period.

14. System for managing an hybrid network (HN) comprising a network controller (NC), a infrastructure, a first switched-on wireless access (AP1) and at least one second switched-on wireless access point (AP2, AP3), said access points (AP1, AP2, AP3) being connected to said network controller (NC) via said infrastructure, a switched-on wireless access point (APj) detecting a wireless link (<APj, Ni>) between a wireless node (Ni) and one said access point (APj) when said access point (APj) is currently receiving from said node (Ni) a signal having a strength greater than a first strength threshold (LS1T), wherein the switched-on wireless access point (APj) determining a wireless association ([APj, Ni]) is set between said node (Nᵢ) and the access point (APj) when said node (Ni) and said access point (APj) are both currently configured for exchanging data, each of the switched-on wireless access point (APj) being configured for sending a first report (REP1) on strength of any wireless link where said access point (APj) is involved, each of the switched-on wireless access point (APj) being further configured for sending a second report (REP2) on a status of any current wireless association where said access point (AP1, AP2, AP3) is involved **characterized in that** said network controller (NC) comprises :
- Means for receiving said first and second report (REP1, REP2) form said switched-on wireless access point (AP1, AP2, AP3);
- Means for synthesizing information comprised in said first and second report (REP1, REP2);
- Means for sending a command via said infrastructure to any switched-on wireless access point (AP1, AP2, AP3) connected over said infrastructure.

15. System according to claim 14, **wherein** the network controller (NC) comprises:
- means for determining for each wireless node involved in a wireless association with one of the switched-on wireless access point a list of switched-on access point (AP2, AP3) involved in a wireless link with said wireless node;
- means for determining a list (LSOAP) of switched-off access point (AP3, AP4) connected over said infrastructure.
